# EUROPÄISCHE PATENTSCHRIFT

(11) **EP 0 595 046 B1**
(45) Veröffentlichungstag und Bekanntmachung des Hinweises auf die Patenterteilung: **10.06.1998**
(21) Anmeldenummer: 93115734.1
(22) Anmeldetag: 29.09.1993
(51) Int. Cl.: F16K 3/02

(54) **Absperrvorrichtung für gasförmige Medien hoher Temperatur**
Shut-off device for gaseous media at high temperatures
Dispositif d'obturation pour milieux gazeux à haute température

(30) Priorität: 28.10.1992 DE 4236410
(43) Veröffentlichungstag der Anmeldung: 04.05.1994
(73) Patentinhaber: Zimmermann & Jansen GmbH, D-52355 Düren (DE)
(72) Erfinder: Krieg, Uwe, Dr., D-52372 Kreuzau (DE); Zosel, Dietrich, D-52351 Düren (DE)
(74) Vertreter: Popp, Eugen, Dr.

(56) Entgegenhaltungen:
- EP-A- 0 052 523
- CH-A- 666 334
- DE-A- 3 811 874
- DE-A- 4 010 628

## Beschreibung

Die Erfindung betrifft eine Absperrvorrichtung für gasförmige Medien hoher Temperatur, insbesondere zur Absperrung von Heißgasleitungen, die von Winderhitzern zu einem Hochofen führen, bestehend aus einem Gehäuse mit mindestens einem Dichtsitz und einem in dem Gehäuse beweglich angeordneten Absperrorgan, wobei das Absperrorgan und/oder der bzw. die Gehäusedichtsitze aus feuerfestem, keramischem Material bestehen.

Eine derartige Absperrvorrichtung ist zum Beispiel bekannt aus der EP-B-0 052 523 oder DE-A-40 10 628. Der Vorteil von keramischem Material für Absperrorgan und Dichtsitze besteht darin, daß dieses hochtemperaturbeständig ist. Dementsprechend kann auf die Kühlung der Dichtsitze und/oder des Absperrorgans verzichtet werden. Während die nach wie vor im Einsatz befindlichen Stahl-Konstruktionen allenfalls bis zu Temperaturen von 1100 °C einsetzbar sind, sind Konstruktionen, bei denen Absperrorgan und Dichtsitze aus feuerfestem keramischem Material bestehen, bis zu Temperaturen von 1300 °C einsetzbar. Nachteilig ist jedoch, daß das keramische Material gegenüber Wärmeschwankungen empfindlicher ist als Stahl mit der Folge, daß bei Anordnung der keramischen Bauteile innerhalb eines Stahlgehäuses Wärmespannungen auftreten, die zu Leckagen und Beschädigungen der Armatur bis zur Unbrauchbarkeit derselben führen können. Vor allem ist es problematisch, die Keramik-Dichtsitze, die ebenso wie das Keramik-Absperrorgan hohen Temperaturwechselbeanspruchungen und dementsprechend hohen Flächen- und Punktlasten ausgesetzt sind, innerhalb eines Stahlgehäuses so anzuordnen, daß Wärmespannungen zwischen Keramik und Stahl und damit die oben genannten Folgen dieser Wärmespannungen vermieden werden. Dabei ist auch zu beachten, daß die Konstruktion für gasförmige Medien mit Dauerbetriebstemperaturen bis zu 1650 °C - 1800 °C und Differenzdrücken von bis zu 4-6 Bar geeignet ist. Dann läßt sich die Absperrvorrichtung auch problemlos als Heißwindschieber an Winderhitzern von Hochöfen einsetzen.

Schließlich sei noch darauf hingewiesen, daß vollkeramische Bauteile eine relativ hohe Wärmeleitfähigkeit aufweisen. Dementsprechend hoch sind bei den bekannten Keramik-Konstruktionen die Wärmeverluste über die Keramikbauteile. Auch diesbezüglich gilt es, Abhilfe zu schaffen.

Die vorgenannten Ziele lassen sich in überraschend einfacher Weise durch die kennzeichnenden Maßnahmen des Anspruches 1 erreichen, wonach der bzw. die Gehäusedichtsitze - mit Ausnahme ihrer Dichtflächen und ihrer dichtflächennahen Randbereiche - und deren Verankerungselemente - mit Ausnahme ihrer gehäuseseitigen Anschlußflächen und Verankerungsabschnitte - allseitig von einer faserigen Keramikmasse umbettet sind, welche sich durch geringe Wärmeleitfähigkeit sowie Kompressibilität auszeichnet. Die erfindungsgemäß gewünschte Kompressibilität und geringe Wärmeleitfähigkeit sind bedingt durch Hohlräume zwischen den Keramikfasern. Die faserige Keramikmasse ist demnach hinsichtlich ihres Aufbaus vergleichbar mit einer Filz-Packung, wobei die einzelnen Fasern an den Berührungspunkten auch zusammengesintert sein können. Vorzugsweise beträgt das Hohlraumvolumen der faserigen Keramikmasse zwischen etwa 20 und 70 %, insbesondere etwa 25 bis 50 %, bezogen auf das Gesamtvolumen der vorgenannten Masse bzw. Einbettung. Die Keramikfasern sind innerhalb der Masse irregulär bzw. wirr verteilt, wodurch eine dreidimensionale Stabilität der erfindungsgemäß vorgesehenen Einbettung der Gehäusedichtsitze erhalten wird. Dementsprechend sind die Gehäusedichtsitze erfindungsgemäß relativ spannungsfrei innerhalb des Gehäuses der Absperrvorrichtung gehalten. Gleichzeitig wird durch die erfindungsgemäße Einbettung der Dichtsitze in faseriger Keramikmasse der Wärmeverlust über das Gehäuse der Absperrvorrichtung auf ein Minimum reduziert. Dieser Effekt wird zusätzlich gefördert durch die Maßnahmen nach Anspruch 2, wonach die faserige Keramikmasse von einem Keramikfaserschaum ummantelt ist, der derart kompakt ist, daß er zum einen zur Begrenzung des Strömungskanals im Gehäuse der Absperrvorrichtung und zum anderen zur fixierenden Aufnahme von Verankerungselementen und/oder -abschnitten derselben geeignet ist und dient. Aufgrund der Tatsache, daß diese Ummantelung ebenfalls Keramikfasern enthält als auch die Struktur eines Schaums mit Hohlräumen besitzt, wird eine zusätzliche Wärmeisolierung gegenüber der Umgebung erzielt. Gleichzeitig ist das Material für die vorgenannte Ummantelung so fest, insbesondere inkompressibel, daß es zur Begrenzung des Strömungskanals im Bereich der Absperrvorrichtung sowie zur fixierenden Aufnahme von Verankerungselementen geeignet ist. Im Bereich des Strömungskanals kann das Keramikmaterial noch mit einem porenschließenden Überzug, vorzugsweise ebenfalls aus Keramik, versehen sein. Des weiteren hat dieses Material den Vorteil, daß es unter Verwendung von anorganischen (Keramikmaterial) und/oder organischen Bindemitteln gießfähig ist. Dadurch lassen sich in relativ einfacher weise sowohl der Strömungskanal im Bereich der Absperrvorrichtung, d. h. innerhalb des metallischen Gehäuses derselben, als auch die Verankerung der Dichtsitze herstellen.

Zum letztgenannten Zweck ist der Querschnitt eines jeden Dichtsitzes vorzugsweise trapezförmig ausgebildet, wobei die kürzere Grundlinie innerhalb der Dichtfläche liegt bzw. Teil derselben ist. Des weiteren sind für die exakte Fixierung der Dichtsitze die Maßnahmen nach Anspruch 11 von Bedeutung. Dort ist vorgeschlagen, daß die Dichtsitze im dichtflächennahen Randbereich jeweils nut-federartig mit der Ummantelung aus Keramikfaserschaum verankert sind, wobei im Bereich der nut-federartigen Verankerung jeweils eine Anhäufung von Keramikfasern vorliegt. Durch diese Maßnahmen werden die Dichtflächen der Dichtsitze exakt in ihrer vorgegebenen Position gehalten. Wärmespannungen werden über denjenigen Bereich der Dichtsitze abgebaut, der in der oben erläuterten faserigen Keramikmasse eingebettet ist.

Der Hohlraum-Volumenanteil beträgt bei der Ummantelung aus Keramikfaserschaum etwa 20 bis 70, insbesondere 30 %.

Schließlich ist von noch ganz wesentlicher Bedeutung bei der erfindungsgemäßen Konstruktion die Anordnung eines Kompensators an der Rückseite eines jeden Dichtsitzes entsprechend den Ansprüchen 4 ff. Durch diesen Kompensator ist sichergestellt, daß trotz Ausbildung von geringen Spalten zwischen den Umfangsflächen der Dichtsitze einerseits und der Einbettung aus faseriger Keramikmasse andererseits keine durchgehende Gasströmung entsteht, die den Dichtsitz innerhalb seiner Einbettung ausspülen könnte und die bei geschlossener Absperrvorrichtung eine Überbrückung des Absperrorgans zur Folge hätte. Im übrigen wirkt auch die oben erwähnte nut-federartige Verankerung der Dichtsitze der vorgenannten Leckage-Gasströmung entgegen.

Die Dichtsitze sowie das Absperrorgan bestehen bei Hochtemperatureinsatz vorzugsweise aus Al₂O₃-Keramik mit einem Anteil von etwa 85 bis 98 % Al₂O₃, insbesondere etwa 95 % Al₂O₃, und Rest SiO₂, wobei ein Teil des Al₂O₃-Anteils, insbesondere etwa 20 bis 30 % davon, als unregelmäßig verteiltes Faserhaufwerk vorliegt. Die Keramikfasern weisen eine Länge von etwa 10 bis 30 mm auf. Dadurch und durch die Wirr-Faseranordnung wird eine hohe Festigkeit und insbesondere Formstabilität sowohl von Dichtsitz als auch Absperrorgan, z. B. Schieberplatte, erzielt. Ein geringer Anteil (10-15%) besonders langer Fasern mit einer Länge von bis zu 80 mm kann zur Festigkeitserhöhung von Vorteil sein.

Das plattenförmige Absperrorgan, aber auch der bzw. die Dichtsitze, können auch noch durch mindestens eine Gewebeschicht aus Keramikfasern armiert sein. Vorzugsweise sind mehrere Gewebeschichten übereinander angeordnet. Auf diese Weise kann insbeondere beim Absperrorgan der Ausbildung von durch Wärmespannungen bedingten Rissen entgegengewirkt werden, wobei zu bedenken ist, daß bei den Drücken und Dimensionen, wie sie bei z. B. Heißwindschiebern auftreten, die Schieberplatte um einige Millimeter gewölbt wird. Es ist augenscheinlich, daß bei dieser Auswölbung erhöhte Rißbildungs- und sogar Bruchgefahr besteht. Dementsprechend fest muß das Absperrorgan, insbesondere eine Schieberplatte für Heißwindschieber konstruiert sein. Diese Festigkeit wird durch die vorgenannte Wirrfaseranordnung und/oder durch die Mehrschicht-Gewebearmierung erzielt.

In diesem Zusammenhang sei auf ein bevorzugtes Herstellungsverfahren für Heißwind-Schieberplatten mit Nennweiten von 500 bis 2000 mm verwiesen:
Um derart große Teile in einem Stück aus Keramik herstellen zu können, muß von herkömmlichen Technologien abgewichen werden. Normalerweise wird Keramik mit geringer Porosität durch Pressen unter hohem Druck bis zu 1000 Bar und anschließendem Brennen bei Erweichungstemperatur des Grundwerkstoffes hergestellt. Um einen Druck dieser Größenordnung bei relativ großen Bauteilen zu beherrschen, käme nur eine kontrollierte Explosion in Frage, wobei die Druckentlastung über ein Hilfsmedium erfolgen müßte. Für eine Einzelfertigung nach Kundenwunsch ist diese Herstellungsmethode zu aufwendig. Daher wird vorgeschlagen, keine hochreine Al₂O₃-Keramik zu verwenden, sondern ein Haufwerk aus Al₂O₃ (etwa 95 %) und relativ kleine Korngrößen einer niedriger schmelzenden Keramik. Das vereinfacht den technologischen Prozeß entscheidend. Mit diesem Material wird ein Formling gegossen und anschließend bei einer Temperatur gebrannt, die etwa der Betriebstemperatur des Bauteils entspricht. Die Gasdichtheit des Bauteils ist eine Funktion der Brenntemperatur und Brenndauer. Mit zunehmender Brenndauer nimmt nämlich die Porosität exponentiell ab.

Um möglichst homogene Festigkeitseigenschaften zu erreichen, wird der Gußmasse ein Teil ihres Al₂O₃-Anteils als wirr verteiltes Haufwerk von Al₂O₃-Fasern beigemischt. Dadurch ergibt sich ein besserer Schutz gegen Schockbelastung durch äußere Kräfte und Temperaturwechselbeanspruchung.

Vorzugsweise können noch eine oder mehrere Gewebeschichten aus Keramikfasern zur Erhöhung der Festigkeit der Schieberplatten integriert sein.

Generell sei noch darauf hingewiesen, daß beim Brennen des Keramikmaterials eine Volumenverkleinerung eintritt. Diese ist jedoch unkritisch. Ein mögliches Verziehen der Bauteile beim Brennen kann durch Nachbearbeitung mittels Hochdruckwasserstrahlschneidens (3000 Bar mit Schleifmittel) korrigiert werden. Das Finish der Dichtflächen erhält man durch vibratives Auftragen eines sehr feinen Keramikpulvers mit einem Erweichungspunkt entsprechend der Betriebstemperatur und anschließender pneumatischer Druckbeaufschlagung. Durch das feine Keramikpulver werden Restporen gefüllt und bei erster Beaufschlagung der Armaturen unter Betriebstemperatur form- und kraftschlüssig ge- und verbunden. Das Finish kann auch durch sog. Plasma-Coating mit demselben Keramikmaterial durchgeführt werden.

Die erfindungsgemäße Konstruktion ist allen bisherigen Konstruktionen auch dadurch überlegen, daß sie ohne Kühlung keine metallischen Oxidationsprodukte entstehen läßt und dem heißen Medium nur eine minimale Wärmemenge entzieht. Insofern stellt die Erfindung eine optimale Hybridkonstruktion aus Stahl und Keramik dar.

Bei einer besonders bevorzugten Ausführung der erfindungsgemäßen Absperrvorrichtung ist bei Ausbildung des Absperrorgans als hin- und herbewegbare, insbesondere auf- und abbewegbare Schieberplatte vorgesehen, daß der Antrieb der Schieberplatte im unteren Bereich bzw. unterhalb des Gehäuses der Absperrvorrichtung. angeordnet ist . Auf diese Weise ergeben sich zum einen beim Öffnen der Absperrvorrichtung minimale Betätigungskräfte, weil das Eigengewicht des Schiebers den Öffnungsvorgang unterstützt. Zum anderen wird der Antrieb der Schieberplatte nicht zusätzlich durch aufsteigende Warmluft belastet. Dies ist vor allem dann von Bedeutung, wenn es sich beim Antrieb um eine hydraulische Kolben-Zylinder-Einheit handelt.

Um den Antrieb in Schließstellung der Schieberplatte zu entlasten, ist am unteren Rand der Schieberplatte ein Drehriegel angeordnet, der in Schließstellung der Schieberplatte hinter einen Anschlag drehbar ist, so daß die Schieberplatte auch bei inaktivem Antrieb in Schließstellung gehalten bleibt. Umgekehrt kann auch am Gehäuse der Absperrvorrichtung ein Drehriegel vorgesehen sein, der in Schließstellung der Schieberplatte in eine zugeordnete Öffnung eindrehbar ist, so daß die Schieberplatte dann durch den Drehriegel in Schließstellung gehalten wird.

In geöffnetem Zustand ist die Schieberplatte vorzugsweise durch ein Schutzgehäuse umgeben. Dieses Schutzgehäuse schützt den Schieber nicht nur vor mechanischen Beschädigungen, sondern auch vor zu schneller Wärmeabgabe an die Umgebung. Dementsprechend klein können Wärmespannungen am Schieber gehalten werden. Das Schutzgehäuse besteht in bekannter Weise aus Stahlblech mit Wärmeisolation. Der vorgenannte Antrieb befindet sich vorzugsweise außerhalb des Schutzgehäuses. Bei Ausbildung des Antriebs als Kolben-Zylinder-Einheit erstreckt sich lediglich der Kolben in das Schutzgehäuse hinein zum Anschluß an den unteren Rand der Schieberplatte.

Eine weitere Ausbildung des Schieberplatten-Antriebs ist in Anspruch 19 beschrieben, wobei in diesem Zusammenhang nicht innerwähnt bleiben soll, daß es aus der DE 40 10 628 und EP 052 523 an sich bereits bekannt ist, den Antrieb oberhalb des Gehäuses anzuordnen.

Schließlich sei darauf hingewiesen, daß auch bei einem Klappenventil sowohl Ventilteller als auch der zugeordnete Dichtsitz in der hier beanspruchten Weise ausgebildet sein kann. Dies gilt insbesondere auch für die Einbettung des Dichtsitzes innerhalb eines Stahlgehäuses.

Des weiteren sei noch darauf hingewiesen, daß bei einem Schieber der maximale Abstand zwischen Schieberplatte und Dichtsitz aus Gründen der Beschleunigungsfähigkeit und der damit verbundenen dynamischen Belastung 10 mm nicht überschreiten sollte.

Natürlich ist es auch möglich, den Antrieb für eine Schieberplatte seitlich anzuordnen. Dann muß die Schieberplatte in Schließstellung nicht arretiert werden.

Die erfindungsgemäß verwendete Einbettung der Dichtsitze aus faseriger Keramikmasse ist im Handel erhältlich unter der Marke "Microtherm". Dieses Material hat, wie oben bereits ausgeführt, reversible Kompressibilitätseigenschaften, die zum Ausgleich von Wärmedehnungen und Phasensprüngen ausgenutzt werden.

Die Ummantelung aus Keramikfaserschaum zeichnet sich durch eine sehr geringe Dichte aus. Er besitzt etwa dieselbe Temperaturbeständigkeit wie Keramikvollmaterial. Im Vergleich zum Feuerbeton besitzt der hier verwendete Keramikfaserschaum jedoch eine wesentlich geringere Wärmeleitfähigkeit.

Aufgrund der reversiblen Kompressibilität der Microtherm-Einbettung der Dichtsitze sind auch Dehnfugen nicht mehr erforderlich. Im übrigen läßt sich durch die vergleichsweise geringe Dichte der hier verwendeten Keramikmaterialien die gesamte Anordnung sehr leicht bauen, was insbesondere bei groß dimensionierten Armaturen ins Gewicht fällt.

Nachstehend wird eine bevorzugte Ausführungsform der erfindungsgemäßen Konstruktion bei einem Heißwindschieber anhand der beigefügten Zeichnung näher erläutert. Es zeigen:
- Fig. 1: einen Teil-Axialschnitt durch einen Absperrschieber (Heißwindschieber) gemäß der Erfindung;
- Fig. 2: die Zuordnung eines Antriebs zu einer Heißwind-Schieberplatte in schematischer Frontansicht;
- Fig. 3: einen Schnitt durch die Anordnung gemäß Fig. 2, Längslinie A-A in vergrößertem Maßstab;
- Fig. 4 und 5: alternative Ausführungsformen von Dichtsitz-Kompensatoren jeweils im Axialschnitt.

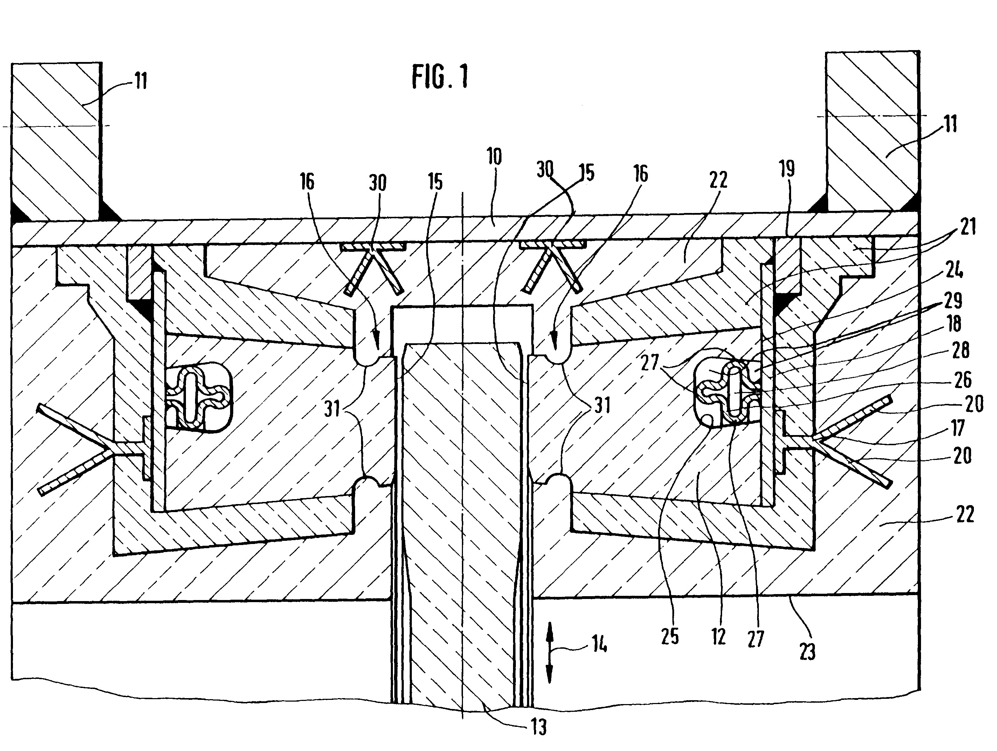

Gemäß Fig. 1 umfaßt die als Heißwindschieber einsetzbare Absperrvorrichtung ein Stahlgehäuse 10 mit stirnseitigen Anschlußflanschen 11 zum Anschluß an nicht dargestellte Rohrleitungsabschnitte. Innerhalb des Gehäuses 10 sind zwei ringförmige Dichtsitze 12 angeordnet, zwischen denen ein als Schieberplatte 13 ausgebildetes Absperrorgan hin- und herbewegbar, insbesondere auf- und abbewegbar ist in Richtung des Doppelpfeils 14. Die beiden Dichtsitze 12 und die Schieberplatte 13 bestehen jeweils aus einem Keramikmaterial wie eingangs beschrieben. Die Gehäusedichtsitze 12 - mit Ausnahme ihrer Dichtflächen 15 und ihrer dichtflächennahen Randbereiche 16 - und deren Verankerungselemente 17, 18 - mit Ausnahme ihrer gehäuseseitigen Anschlußflächen 19 und Verankerungsabschnitte 20 - sind allseitig von einer faserigen Keramikmasse 21 mit den eingangs beschriebenen physikalischen Eigenschaften umbettet. Die faserige Keramikmasse 21 wiederum ist von einem Keramikfaserschaum 22 ummantelt, der derart kompakt ist, daß er zum einen zur Begrenzung des Strömungskanals 23 im Gehäuse 10 der Absperrvorrichtung und zum anderen zur fixierenden Aufnahme von Verankerungselementen, hier Verankerungsabschnitten 20 geeignet ist und dient. Der Querschnitt der Dichtsitze 12 ist jeweils trapezförmig, wobei die kürzere Grundlinie Teil der Dichtfläche 15 ist. Auf diese Weise wird der Dichtsitz sicher innerhalb der vorgenannten Keramikeinbettung und -ummantelung gehalten. Des weiteren hat der Trapezquerschnitt den Vorteil, daß unterschiedliche Ausdehnungskoeffizienten des Dichtsitzes und der diesen umgebenden Bauteile besser kompensiert und transformiert werden. Die vorgenannten Verankerungselemente bestehen vorzugsweise aus Keramikmaterial.

Die Dichtsitze 12 weisen an ihren den Dichtflächen 15 jeweils abgewandten Seiten 24 eine sich über den Umfang der Dichtsitze 12 erstreckende Ausnehmung 25 (Ring-Ausnehmung) zur Aufnahme eines entsprechend ringförmigen Kompensators 26 auf, wobei der Kompensator 26 innerhalb der Ausnehmung eine umfängliche Abdichtung sowohl in radialer als auch axialer Richtung sicherstellt. Die Ring-Dichtflächen sind in Fig. 1 mit der Bezugsziffer 27 gekennzeichnet.

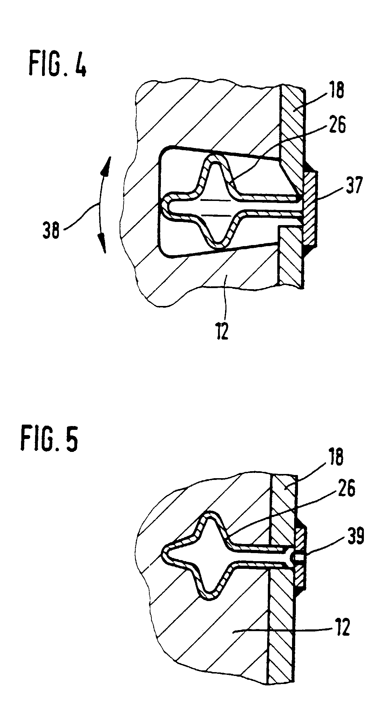

Die Ausnehmung 25 an der Rückseite 24 eines jeden Dichtsitzes 12 weist einen etwa trapezförmigen Querschnitt auf, wobei sich die längere Grundlinie innerhalb der Bodenfläche der Ausnehmung 25 erstreckt. Die Ausnehmung wird also in Richtung nach innen zunehmend breiter. Auf diese Weise wird der vorgenannte Kompensator sicher innerhalb der Ausnehmung gehalten. Konkret besteht der Kompensator 26 aus einem temperaturbeständigen Blech. Dieses ist derart geformt, daß ein im Querschnitt etwa kreuzförmiger Ringraum 28 entsteht, der mit Inertgas, insbesondere Stickstoff, gefüllt ist. Bei Betriebstemperatur dehnt sich die Inertgasfüllung aus mit der Folge, daß der Kompensator unter Ausübung der gewünschten Abdichtung an die drei Begrenzungswände der Ring-Ausnehmung 25 gepreßt wird. Der Hohlraum 29 zwischen Kompensator 26 und Ausnehmung 25 ist entweder mit einem Keramikkleber oder dem Keramikmaterial ausgefüllt, aus welchem die Dichtsitze hergestellt sind (siehe dazu Fig. 5). Der erwähnte Keramikkleber weist einen Ausdehnungskoeffizienten auf, der zwischen dem des Kompensators und dem des Keramikmaterials des Dichtsitzes liegt.

Der Kompensator 26, dessen äußere Oberfläche vorzugsweise aufgerauht ist, ist bei dem Ausführungsbeispiel nach Fig. 1 mit einem am Gehäuse 10 angeschweißten Verankerungsblech 18 verbunden, nämlich veschweißt. Dieses Verankerungsblech 18 erstreckt sich über den Umfang des Gehäuses und ist relativ dünnwandig ausgebildet. Dadurch wird erreicht, daß nur eine minimale Wärmebrücke zwischen Dichtsitz 12 und äußerem Gehäuse bzw. dem Stahlrohrmantel des Gehäuses 10 entsteht. Dementsprechend gering sind die Wärmeverluste bei der erfindungsgemäßen Absperrvorrichtung. Das vorgenannte Verankerungsblech 28 liegt bei dem Ausführungsbeispiel nach Fig. 1 an der Rückseite 24 des Dichtsitzes 12 an bzw. erstreckt sich über die Rückseite 24 desselben.

An der dem Dichtsitz 12 abgewandten Seite des Verankerungsblechs 18 sind auch noch Verankerungselemente 17 befestigt, deren Verankerungsabschnitte 20 jeweils innerhalb des äußeren Mantels aus Keramikfaserschaum 22 fixiert sind. Einige wenige Verankerungselemente 17 dieser Art genügen. Im übrigen sind ähnliche Verankerungselemente 30 an der Innenseite des Stahlrohrmantels des Gehäuses 10 zur Fixierung des Keramikfaserschaum-Mantels 22 innerhalb des Gehäuses 10 angeordnet.

Zur verringerten Wärmeleitung zwischen den Dichtflächen 15 und dem Kompensator 26 sind die Dichtsitze 12 im dichtflächennahen Randbereich 16 jeweils nut-federartig (Nut-Feder-Verbindung 31) in der Ummantelung 22 aus Keramikfaserschaum gehalten, d. h. über den Umfang eingeschnürt. Dadurch wird die Wärmeübergangsfläche zum Kompensator 26 reduziert.

Im Bereich der Nut-Feder-Verankerung 31 ist auch eine Anhäufung von Keramikfasern zumindest im Bereich der Dichtsitze 12, vorzugsweise jedoch auch im Bereich der Keramikfaserschaum-Ummantelung 22 vorgesehen, um eine erhöhte Festigkeit der Dichtsitze in diesem Bereich zu erzielen. Damit ist auch gewährleistet, daß die Dichtflächen 15 der Dichtsitze exakt justiert bleiben, und zwar unabhängig von Temperatur- und/oder Druckschwankungen.

Zu den Kompensatoren 26 sei noch erwähnt, daß sich bei höheren Temperaturen und Drücken trotz der Nut-Feder-Verankerung 31 Spalte zwischen den Umfangsflächen der Dichtsitze 12 und der relativ weichen Einbettung 21 ausbilden können. Würden die Kompensatoren 26 fehlen, könnte eine Überbrückung der Schieberplatte in dessen geschlossener Stellung durch diese Spalte, d. h. eine Gasströmung durch diese Spalte hindurch unter Umgehung der geschlossenen Schieberplatte 13 nicht sicher vermieden werden. Die Folge wäre eine zunehmende Ausspülung der Dichtsitze 12. Dies wiederum hätte eine Lockerung der Dichtsitze 12 zur Folge, so daß die Lebensdauer der Absperrvorrichtung entsprechend begrenzt wäre. Der vorgenannte Kompensatoreffekt wird zusätzlich gefördert durch den Keramikkleber 29.

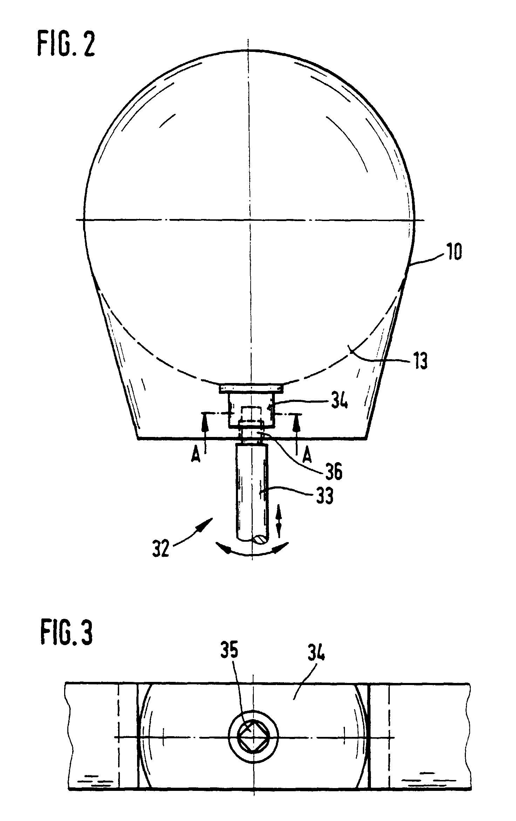

Entsprechend Fig. 2 ist bei Ausbildung des Absperrorgans als hin- und herbewegbare, insbesondere auf- und abbewegbare Schieberplatte 13 der Antrieb 32 derselben im unteren Bereich bzw. unterhalb des Gehäuses 10 der Absperrvorrichtung angeordnet. Die damit verbundenen Vorteile sind eingangs bereits erwähnt.

Bei Ausbildung des Antriebs 32 als hydraulisch, pneumatisch oder hydro-pneumatisch betätigbare Kolben-Zylinder-Einheit ist das freie Ende der Kolbenstange 33 am unteren Rand der Schieberplatte 13 ankoppelbar.

Bei der Ausführungsform nach den Figuren 2 und 3 ist am unteren Rand der Schieberplatte 13 eine Drehriegelanordnung mit einem Drehriegel 34 vorgesehen, der in Schließstellung der Schieberplatte hinter einen nicht näher dargestellten Gehäuse-Anschlag drehbar ist, so daß die Schieberplatte 13 auch bei inaktivem Antrieb in Schließstellung gehalten bleibt. An der Unterseite des Drehriegels 34 ist eine Vierkant-Öffnung vorgesehen, in die ein entsprechender Vierkant-Vorsprung am freien Ende der Kolbenstange 33 einführbar ist. Die Vierkant-Öffnung ist mit der Bezugsziffer 35 und der Vierkant-Vorsprung mit der Bezugsziffer 36 gekennzeichnet. Auf diese Weise ist es möglich, in Schließstellung der Schieberplatte 13 durch Vierteldrehung der Kolbenstange 33 den Drehriegel 34 in Verriegelungsstellung bzw. aus dieser heraus zu drehen. Die Kolbenstange 33 hat somit eine Art Doppelfunktion. Sie dient sowohl zum Schließen bzw. Öffnen der Schieberplatte 13 als auch zur Betätigung des Drehriegels 34 in der beschriebenen Weise.

Alternativ kann der Antrieb der Schieberplatte 13 auch im oberen Bereich bzw. oberhalb des Gehäuses 10 der Absperrvorrichtung angeordnet sein. In diesem Fall umfaßt der Antrieb vorzugsweise eine Trommel zum Auf- und Abwickeln von mindestens einem am oberen Rand der Schieberplatte angeschlossenen Hubseil, welches vorzugsweise aus Keramikfasern hergestellt ist. Das freie Ende dieses Hubseils ist aufgespleißt und im oberen Rand der Schieberplatte 13, die ja ebenfalls aus Keramikmaterial besteht, eingegossen. Vorzugsweise sind zwei Hubseile angeordnet, um eine exakte Vertikalführung der Schieberplatte zu gewährleisten.

Die Fig. 4 und 5 zeigen noch Alternativen in bezug auf die Ausbildung und Anordnung des Kompensators 26. Bei der Ausführungsform nach Fig. 4 ist das Verankerungsblech 18 zweigeteilt und an der Rückseite durch einen Verbindungsring 37 überbrückt. Die Anschlußenden des Kompensators 26 sind zum einen an den Verbindungsring 37 und zum anderen an dem freien Ende des radial äußeren Teils des Verankerungsblechs 18 angeschlossen, insbesondere angeschweißt. Der radial innere Rand des radial äußeren Abschnitts des Verankerungsblechs 18 ist darüber hinaus abgeschrägt, wie in Fig. 4 dargestellt. Auf diese Weise ist ein zusätzlicher Freiheitsgrad für den Dichtsitz 12 einschließlich Kompensator 26 geschaffen, wie durch den Doppelpfeil 38 angedeutet ist.

Bei der Ausführungsform nach Fig. 5 ist der Kompensator 26 vollständig in der Keramikmasse des Dichtsitzes 12 eingebettet, insbesondere eingegossen. Durch eine nachträglich verschließbare Öffnung 39 kann beim Brennen des so hergestellten Dichtsitzes 26 in den Hohlraum des Kompensators 26 ein Kühlmedium eingeblasen werden. Nach Fertigstellung des Dichtsitzes 12 wird der Kompensator mit der Grundplatte 18 verschweißt. Durch die Öffnung 39 wird dann der Kompensator mit Inertgas, insbesondere Stickstoff, gefüllt, um dann in der in Fig. 5 angedeuteten Weise verschlossen zu werden.

Die beschriebenen Konstruktionen sind bei geeigneter Dimensionierung für Temperaturen bis zu 2200 °C und Differenzdrücken bis zu 10 bar geeignet.

Bei niedrigeren Betriebstemperaturen von bis zu 1300 °C kann das Absperrorgan und/oder der zugeordnete Dichtsitz primär, d. h. bis zu 100%, aus SiO₂-Fasern hergestellt sein.

Die Wärmeleitfähigkeit der Keramikmasse 21 beträgt bei 1000 °C etwa 0,02 bis 0,08, insbesondere etwa 0,04 Watt/m °K.

Die Kompressibilität der Keramikmasse beträgt vorzugsweise etwa 5 bis 15 Vol.-%, ohne daß sie in ihrer Struktur zusammenbricht.

Die Wärmeleitfähigkeit des Keramikschaums beträgt bei 1000 °C etwa 0,15 bis 0,30, insbesondere etwa 0,25 Watt/m °K.

Die Wärmeleitfähigkeit des verwendeten Al₂O₃-Keramikmaterials beträgt bei 1000 °C etwa 1,20 bis 1,60, insbesondere etwa 1,43 Watt/m °K.

Sämtliche in den Anmeldungsunterlagen offenbarten Merkmale werden als erfindungswesentlich beansprucht, soweit sie einzeln oder in Kombination gegenüber dem Stand der Technik neu sind.

## Patentansprüche

1. Absperrvorrichtung für gasförmige Medien hoher Temperatur, insbesondere zur Absperrung von Heißgasleitungen, die von Winderhitzern zu einem Hochofen führen, bestehend aus einem Gehäuse (10) mit mindestens einem Dichtsitz (12) und einem in dem Gehäuse (10) beweglich angeordneten Absperrorgan (13), wobei das Absperrorgan (13) und/oder der bzw. die Gehäusedichtsitze (12) aus feuerfestem, keramischem Material bestehen,
**dadurch gekennzeichnet**, daß der bzw. die Gehäusedichtsitze (12) - mit Ausnahme ihrer Dichtflächen (15) und ihrer dichtflächennahen Randbereiche (16) - und deren Verankerungselemente (17, 18) - mit Ausnahme ihrer gehäuseseitigen Anschlußflächen (19) und Verankerungsabschnitte (20) - allseitig von einer faserigen Keramikmasse (21), welche sich durch geringe Wärmeleitfähigkeit sowie reversible Kompressibilität auszeichnet, umbettet sind.

2. Absperrvorrichtung nach Anspruch 1,
dadurch gekennzeichnet, daß die faserige Keramikmasse (21) von einem Keramikfaserschaum (22) ummantelt ist, der derart kompakt und fest ist, daß er zum einen zur Begrenzung des.Strömungskanals (23) im Bereich-der Absperrvorrichtung und zum anderen zur fixierenden Aufnahme von Verankerungselementen und/oder -abschnitten (20) derselben geeignet ist und dient.

3. Absperrvorrichtung nach Anspruch 1 oder 2,
dadurch gekennzeichnet, daß der Querschnitt eines Dichtsitzes (12) trapezförmig ist, wobei die kürzere Grundlinie sich innerhalb der Dichtfläche (15) erstreckt.

4. Absperrvorrichtung nach einem der Ansprüche 1 bis 3,
dadurch gekennzeichnet, daß die Dichtsitze (12) an ihren den Dichtflächen (15) jeweils abgewandten Seiten (24) eine sich über den Umfang der Dichtsitze (12) erstreckende Ausnehmung (25) zur Aufnahme eines entsprechend ringförmigen Kompensators (26) aufweisen, wobei der Kompensator (26) innerhalb der Ausnehmung eine umfängliche Abdichtung (27) sowohl in radialer als auch axialer Richtung sicherstellt.

5. Absperrvorrichtung nach Anspruch 4,
dadurch gekennzeichnet, daß die Ausnehmung (25) an der Rückseite (24) des Dichtsitzes (12) einen etwa trapezförmigen Querschnitt aufweist, wobei die längere Grundlinie sich innerhalb der Bodenfläche der Ausnehmung (25) erstreckt.

6. Absperrvorrichtung nach Anspruch 4 oder 5,
dadurch gekennzeichnet, daß der Kompensator (26) aus einem temperaturbeständigen Blech geformt ist, insbesondere einem Blech aus einer Nickellegierung, und zwar derart, daß ein im Querschnitt etwa kreuzförmiger Ringhohlraum entsteht, der mit Inertgas, insbesondere Stickstoff oder dgl. gefüllt ist.

7. Absperrvorrichtung nach Anspruch 6,
dadurch gekennzeichnet, daß der Hohlraum (29) zwischen Kompensator (26) und Dichtsitz-Ausnehmung (25) mit einem Keramikkleber ausgefüllt ist.

8. Absperrvorrichtung nach einem der Ansprüche 4 bis 7,
dadurch gekennzeichnet, daß der Kompensator (26) mit einem am Gehäuse (10) angebrachten, insbesondere angeschweißten Verankerungsblech (18) verbunden, insbesondere verschweißt ist.

9. Absperrvorrichtung nach Anspruch 8,
dadurch gekennzeichnet, daß das Verankerungsblech (18) an der Rückseite (24) des Dichtsitzes (12) anliegt bzw. sich über die Rückseite (24) desselben erstreckt.

10. Absperrvorrichtung nach Anspruch 8 oder 9,
dadurch gekennzeichnet, daß an der dem Dichtsitz (12) abgewandten Seite des Verankerungsblechs (18) Verankerungselemente (17) befestigt sind, deren Verankerungsabschnitte (20) jeweils innerhalb des äußeren Mantels (22) aus Keramikfaserschaum fixiert sind.

11. Absperrvorrichtung nach einem der Ansprüche 1 bis 10,
dadurch gekennzeichnet, daß die Dichtsitze (12) im dichtflächennahen Randbereich (16) jeweils nut-federartig (31) mit der Ummantelung (22) aus Keramikfaserschaum verankert ist.

12. Absperrvorrichtung nach einem der Ansprüche 1 bis 11,
dadurch gekennzeichnet, daß die Dichtsitze (12) als Al₂O₃-Keramik mit einem Anteil von etwa 85 bis 98 % Al₂O₃, insbesondere etwa 95 % Al₂O₃, und Rest SiO₂ bestehen, wobei ein Teil des Al₂O₃-Gehalts, insbesondere etwa 20 bis 30 % davon, als unregelmäßig verteiltes Faserhaufwerk vorliegt, vorzugsweise mit einer Anhäufung von Keramikfasern in den dichtflächennahen Bereichen der nut-federartigen Verankerung (31) zwischen Dichtsitz (12) und äußerer Ummantelung (22) aus Keramikfaserschaum.

13. Absperrvorrichtung nach einem der Ansprüche 1 bis 12,
dadurch gekennzeichnet, daß das Absperrorgan (13) eine etwa senkrecht zum Strömungskanal (23) hin- und herbewegbare, insbesondere auf- und abbewegbare Schieberplatte ist, die aus Al₂O₃-Keramik mit einem Anteil von etwa 85 bis 98 % Al₂O₃, insbesondere etwa 95 % Al₂O₃, und Rest SiO₂ besteht, wobei ein Teil des Al₂O₃-Gehalts, insbesondere etwa 20 bis 30 % davon, als unregelmäßig verteiltes Faserhaufwerk vorliegt.

14. Absperrvorrichtung nach Anspruch 12 oder 13,
dadurch gekennzeichnet, daß die Keramikfasern eine Länge von etwa 10 bis 30 mm aufweisen.

15. Absperrvorrichtung nach einem der Ansprüche 12 oder 13,
dadurch gekennzeichnet, daß die Schieberplatte (13) und/oder die Dichtsitze durch mindestens eine Gewebeschicht aus Keramikfasern armiert sind.

16. Absperrvorrichtung nach einem der Ansprüche 1 bis 15, dadurch gekennzeichnet, daß bei Ausbildung des Absperrorgans als hin- und herbewegbare, insbesondere auf- und abbewegbare Schieberplatte (13) der Antrieb (32) derselben im unteren Bereich bzw. unterhalb des Gehäuses (10) der Absperrvorrichtung angeordnet ist.

17. Absperrvorrichtung nach Anspruch 16,
dadurch gekennzeichnet, daß als Schieberplatten-Antrieb eine elektromotorisch angetriebene Betätigungsstange oder eine hydraulisch, pneumatisch oder hydro-pneumatisch betätigbare Kolben-Zylinder-Einheit dient, wobei das freie Ende der Kolbenstange (33) bzw. der elektromotorisch angetriebenen Betätigungsstange am unteren Rand der Schieberplatte (13) ankoppelbar ist.

18. Absperrvorrichtung nach Anspruch 17,
dadurch gekennzeichnet, daß am unteren Rand der Schieberplatte (13) ein Drehriegel (34) angeordnet ist, der in Schließstellung der Schieberplatte hinter einen Anschlag drehbar ist, insbesondere mittels der am unteren Rand der Schieberplatte ankoppelbaren Kolbenstange (33) des Schieberplatten-Antriebs (32), so daß die Schieberplatte (13) auch bei inaktivem oder abgekoppeltem Antrieb (32) in Schließstellung gehalten bleibt.

19. Absperrvorrichtung, nach einem der Ansprüche 1 bis 15, bei der das Absperrorgan als auf- und abbewegbare Schieberplatte ausgebildet, und deren Antrieb im oberen Bereich bzw. oberhalb des Gehäuses (10) der Absperrvorrichtung angeordnet ist, dadurch gekennzeichnet, daß der Antrieb mindestens eine Trommel zum Auf- und Abwickeln von mindestens einem am oberen Rand der Schieberplatte angeschlossenen Hubseil, insbesondere einem aus Keramikfasern hergestellten Hubseil, umfaßt.

20. Absperrvorrichtung nach einem der Ansprüche 1 bis 19,
dadurch gekennzeichnet, daß das Absperrorgan eine schwenkbar im Strömungskanal (23) angeordnete (Ventil-) Klappe ist.

## Claims

1. Shut-off device for gaseous media at high temperature, in particular for shutting-off hot-gas pipes which connect wind heaters to a furnace, comprising a housing (10) with at least one seal seat (12) and a shut-off element (13) which is movably arranged in the housing (10), and the shut-off element (13) and/or the housing seal seat(s) (12) is/are made of fire-resistant ceramic material, **characterised in that** the housing seal seat(s) (12), with the exception of their seal surfaces (15) and their edge areas (16) near the seal surfaces, and their anchoring elements (17, 18), with the exception of their connecting surfaces (19) on the housing and anchoring sections (20), is/are on all sides embedded by a fibrous ceramic mass (21) which distinguishes itself by low heat conductivity as well as reversible compressibility.

2. Shut-off device according to Claim 1, **characterised in that** the fibrous ceramic mass (21) is encased by a ceramic fibre foam (22) which is so compact and solid that it is suitable and serving on the one hand to define the flow channel (23) in the area of the shut-off device and on the other hand for accommodating and fixing its anchoring elements and/or anchoring sections (20).

3. Shut-off device according to Claim 1 or 2, **characterised in that** the cross-section of a seal seat (12) is trapezoidal and the shorter base line extends within the sealing surface (15).

4. Shut-off device according to one of Claims 1 to 3, **characterised in that** the seal seats (12) comprise at their sides (24) facing away from their sealing surfaces (15) a cutout (25) which extends over the periphery of the seal seats (12) for accommodating a respective annular compensator (26), and the compensator (26) secures within the cutout a peripheral seal (27) both in the radial and axial direction.

5. Shut-off device according to Claim 4, **characterised in that** the cutout (25) has at the rear (24) of the seal seat (12) an approximately trapezoidal cross-section, and the longer base line extends within the base surface of the cutout (25).

6. Shut-off device according to Claim 4 or 5, **characterised in that** the compensator (26) is formed of a temperature-resistant metal plate, in particular a metal sheet of a nickel alloy in such a manner that a cross-sectionally approximately cross-shaped annular cavity is produced which is filled with inert gas, in particular nitrogen or the like.

7. Shut-off device according to Claim 6, **characterised in that** the cavity (29) between compensator (26) and seal-seat cutout (25) is filled with a ceramic adhesive.

8. Shut-off device according to one of Claims 4 to 7, **characterised in that** the compensator (26) is connected, in particular welded, to an anchoring plate (18) which is fitted, in particular welded, to the housing (10).

9. Shut-off device according to Claim 8, **characterised in that** the anchoring plate (18) abuts the rear (24) of the seal seat (12) or extends over its rear (24).

10. Shut-off device according to Claim 8 or 9, **characterised in that** to the side of the anchoring plate (18) facing away from the seal seat (12) are mounted anchoring elements (20) the respective anchoring sections (20) of which are respectively fixed within the outer casing (22) of ceramic fibre foam.

11. Shut-off device according to one of Claims 1 to 10, **characterised in that** the seal seats (12) are respectively anchored in the manner of groove springs (31) in the edge area (16) near the sealing surface to the casing (22) of ceramic fibre foam.

12. Shut-off device according to one of Claims 1 to 11, **characterised in that** the seal seats (12) are Al₂O₃ ceramics composed with a proportion of between approximately 85 and 98% Al₂O₃, in particular approximately 95% Al₂O₃, and the remainder SiO₂, and a portion of the Al₂O₃ content, in particular between approximately 20 and 30% thereof, is present as irregularly distributed fibre pile, preferably with a pile of ceramic fibres in the areas near the sealing surfaces of the groove-spring like anchorage (31) between seal seat (12) and outer casing (22) of ceramic fibre foam.

13. Shut-off device according to one of Claims 1 to 12, **characterised in that** the shut-off element (13) is a slide plate, which is movable to and fro approximately vertically to the flow channel (23) and in particular up and down and composed of Al₂O₃ ceramic with a proportion of approximately between 85 and 98% Al₂O₃, in particular approximately 95% Al₂O₃ and the remainder SiO₂, and a portion of the Al₂O₃ content, in particular between approximately 20 and 30% thereof, are present as irregularly distributed fibre pile.

14. Shut-off device according to Claim 12 or 13, **characterised in that** the ceramic fibres have a length of between approximately 10 and 30 mm.

15. Shut-off device according to one of Claims 12 or 13, **characterised in that** the slide plate (13) and/or the seal seats are armed by at least one fabric layer of ceramic fibres.

16. Shut-off device according to one of Claims 1 to 15, **characterised in that** with a design of the shut-off element as a slide plate (13) which is movable to and fro and in particular up and down, its drive (32) is arranged in the lower area or below the housing (10) of the shut-off device.

17. Shut-off device according to Claim 16, **characterised in that** an operating rod driven by an electric motor or a hydraulically, pneumatically or hydro-pneumatically operated piston-cylinder unit serves as slide-plate drive, and the free end of the piston rod (33) or the operating rod which is driven by an electric motor are coupled onto the lower edge of the slide plate (13).

18. Shut-off device according to Claim 17, **characterised in that** at the lower edge of the slide plate (13) is arranged a rotary lock (34) which in the shut position of the slide plate is rotated behind a stop, in particular by means of the piston rod (33), which is coupled to the lower edge of the slide plate, of the slide-plate drive (32), so that the slide plate (13) is kept in the shut position even when drive (32) is inactive or uncoupled..

19. Shut-off device according to one of Claims 1 to 15, in which the shut-off element is designed as a slide plate which is movable up and down and the drive of which is arranged in the upper area or above the housing (10) of the locking device, **characterised in that** the drive includes at least one drum for reeling on and off at least one lifting rope which is connected to the upper edge of the slide plate, in particular a lifting rope composed of ceramic fibres.

20. Shut-off device according to one of Claims 1 to 19, **characterised in that** the shut-off element is a (valve) flap which is pivotally arranged in the flow channel (23).

## Revendications

1. Dispositif d'obturation pour milieux gazeux à haute température, en particulier pour l'obturation de conduites de gaz chaud menant de récupérateurs de chaleur à un haut fourneau, composé d'un boîtier (10) présentant au moins un siège d'étanchéité (12) et d'un organe d'obturation (13) disposé mobile dans le boîtier (10), l'organe d'obturation (13) et/ou le ou les sièges d'étanchéité (12) du boîtier étant réalisés en un matériau céramique résistant au feu, caractérisé en ce que le ou les sièges d'étanchéité (12) du boîtier - à l'exception de leurs surfaces d'étanchéité (15) et de leurs régions marginales (16) voisines des surfaces d'étanchéité - et les éléments d'ancrage (17, 18) de ceux-ci - à l'exception de leurs surfaces de jonction (19) et sections d'ancrage (20) du côté du boîtier - sont enrobés de tous côtés par une masse céramique fibreuse (21) qui se distingue par une faible conductibilité thermique et par une compressibilité réversible.

2. Dispositif d'obturation selon la revendication 1, caractérisé en ce que la masse céramique fibreuse (21) est enveloppée par une mousse de fibre céramique (22) d'une compacité et d'une solidité telles qu'elle convient et sert d'une part à la limitation du canal d'écoulement (23) dans la région du dispositif d'obturation et d'autre part à la réception avec fixation d'éléments et/ou sections de fixation (20) de celui-ci.

3. Dispositif d'obturation selon l'une des revendications 1 et 2, caractérisé en ce que la section transversale d'un siège d'étanchéité (12) est trapézoïdale, la petite base s'étendant à l'intérieur de la surface d'étanchéité (15).

4. Dispositif d'obturation selon l'une des revendications 1 à 3, caractérisé en ce que les sièges d'étanchéité (12) présentent, sur leurs côtés respectifs (24) tournés à l'opposé des surfaces d'étanchéité (15), un évidement (25) s'étendant sur la périphérie des sièges d'étanchéité (12) pour recevoir un compensateur (26) d'une forme annulaire correspondante, le compensateur (26) assurant à l'intérieur de l'évidement une étanchéité périphérique (27) tant en direction radiale qu'en direction axiale.

5. Dispositif d'obturation selon la revendication 4, caractérisé en ce que l'évidement (25) présente sur le côté arrière (24) du siège d'étanchéité (12) une section transversale à peu près trapézoïdale, la grande base s'étendant à l'intérieur de la surface de fond de l'évidement (24).

6. Dispositif d'obturation selon l'une des revendications 4 et 5, caractérisé en ce que le compensateur (26) est formé d'une tôle résistante en température, en particulier d'une tôle d'alliage de nickel, de telle sorte qu'un espace creux annulaire à peu près en forme de croix en section transversale est réalisé, qui est rempli de gaz inerte, en particulier d'azote ou analogue.

7. Dispositif d'obturation selon la revendication 6, caractérisé en ce que l'espace creux (29) entre le compensateur (26) et l'évidement (25) du siège d'étanchéité est rempli d'une colle céramique.

8. Dispositif d'obturation selon l'une des revendications 4 à 7, caractérisé en ce que le compensateur (26) est lié, en particulier soudé, à une tôle d'ancrage (18) rapportée, en particulier soudée, sur le boîtier (10).

9. Dispositif d'obturation selon la revendication 8, caractérisé en ce que la tôle d'ancrage (18) est adjacente au côté arrière (24) du siège d'étanchéité (12) ou s'étend par dessus le côté arrière (24) de celui-ci.

10. Dispositif d'obturation selon l'une des revendications 8 et 9, caractérisé en ce que sur le côté de la tôle d'ancrage (18) tourné à l'opposé du siège d'étanchéité (12) sont fixés des éléments d'ancrage (17) dont les sections d'ancrage (20) sont fixées individuellement à l'intérieur de l'enveloppe extérieure (22) en mousse de fibre céramique.

11. Dispositif d'obturation selon l'une des revendications 1 à 10, caractérisé en ce que les sièges d'étanchéité (12), dans la région marginale (16) proche de la surface d'étanchéité, sont ancrés individuellement par encliquetage (31) avec le gainage (22) en mousse de fibre céramique.

12. Dispositif d'obturation selon l'une des revendications 1 à 11, caractérisé en ce que les sièges d'étanchéité (12) sont réalisés en céramique à base de Al₂O₃, présentant une proportion d'environ 85 à 98 % de Al₂O₃, en particulier environ 95 % de Al₂O₃, le reste étant SiO₂, une partie de la teneur en Al₂O₃, en particulier environ 20 à 30 % de celle-ci, étant sous forme d'entassement de fibres distribué irrégulièrement, de préférence avec une accumulation de fibres céramiques dans les régions, proches des surfaces d'étanchéité, de l'ancrage par encliquetage (31) entre le siège d'étanchéité (12) et le gainage extérieur (22) en mousse de fibre céramique.

13. Dispositif d'obturation selon l'une des revendications 1 à 12, caractérisé en ce que l'organe d'obturation (13) est une plaque coulissante mobile de manière alternative, en particulier de haut en bas, à peu près perpendiculairement au canal d'écoulement (23), constitué par une céramique à base de Al₂O₃ comportant une proportion d'environ 85 à 98 % Al₂O₃, en particulier environ 95 % Al₂O₃, le reste étant SiO₂, une partie de la teneur en Al₂O₃, en particulier 20 à 30 % de celle-ci, étant sous forme d'entassement de fibres distribué irrégulièrement.

14. Dispositif d'obturation selon l'une des revendications 12 et 13, caractérisé en ce que les fibres céramique présentent une longueur d'environ 10 à 30 mm.

15. Dispositif d'obturation selon l'une des revendications 12 et 13, caractérisé en ce que la plaque coulissante (13) et/ou les sièges d'étanchéité sont armés par au moins une couche de tissu de fibres céramiques.

16. Dispositif d'obturation selon l'une des revendications 1 à 15, caractérisé en ce que, lorsque l'organe d'obturation est réalisé sous la forme d'une plaque coulissante (13) mobile de manière alternative, en particulier de haut en bas, l'entraînement (32) de celle-ci est disposé dans la région inférieure ou au-dessous du boîtier (10) du dispositif d'obturation.

17. Dispositif d'obturation selon la revendication 16, caractérisé en ce qu'une tige d'actionnement entraînée par moteur électrique ou un ensemble piston-cylindre à actionnement hydraulique, pneumatique ou hydropneumatique sert en tant qu'entraînement de plaque coulissante, l'extrémité libre de la tige de piston 33 ou de la tige d'actionnement entraînée par moteur électrique est couplée au bord inférieur de la plaque coulissante 13.

18. Dispositif d'obturation selon la revendication 17, caractérisé en ce que sur le bord inférieur de la plaque coulissante (13) est disposé un verrou rotatif (34) qui peut tourner derrière une butée dans la position de fermeture de la plaque coulissante, en particulier au moyen de la tige de piston (33) de l'entraînement de plaque coulissante (32) pouvant s'accoupler au bord inférieur de la plaque coulissante, de telle sorte que la plaque coulissante (13) est maintenue en position de fermeture même lorsque l'entraînement (32) est inactif ou désaccouplé.

19. Dispositif d'obturation selon l'une des revendications 1 à 15, dans lequel l'organe d'obturation est réalisé en tant que plaque coulissante mobile de haut en bas, et son entraînement est disposé dans la région supérieure ou au-dessus du boîtier (10) du dispositif d'obturation, caractérisé en ce que l'entraînement comprend au moins un tambour pour l'enroulement et le déroulement d'au moins un câble de levage raccordé au bord supérieur de la plaque coulissante, en particulier un câble de levage fabriqué en fibres céramiques.

20. Dispositif d'obturation selon l'une des revendications 1 à 19, caractérisé en ce que l'organe d'obturation est un clapet (de soupape) disposé de manière pivotante dans le canal d'écoulement (23).
